**Europäisches Patentamt**

(19) **European Patent Office**

**Office européen des brevets**

(11) Publication number: **0 114 155**
A1

(12) # EUROPEAN PATENT APPLICATION

(21) Application number: **84850015.3**

(22) Date of filing: **17.01.84**

(51) Int. Cl.³: **B 65 G 21/06,** B 65 G 41/00

(30) Priority: **17.01.83 SE 8300203**

(43) Date of publication of application: **25.07.84**
**Bulletin 84/30**

(84) Designated Contracting States: **AT BE CH DE FR GB IT LI NL**

(71) Applicant: **Magnusson, Lars, Gräfsnäs Säteri, S-466 00 Sollebrunn (SE)**

(72) Inventor: **Magnusson, Lars, Gräfsnäs Säteri, S-466 00 Sollebrunn (SE)**

(74) Representative: **Graudums, Valdis et al, Backers Patentbyra AB Drottninggatan 15, S-441 14 Göteborg (SE)**

(54) **A dismountable belt conveyor.**

(57) In order to make a belt conveyor easily dismountable and easy to operate, the conveyor includes a framing composed of at least three parts (12, 17) provided with telescoping components (26). The end parts (12) of the framing are provided with support means (13) designed in such a manner that the belt (20) can be slipped into the framing (10) sidewardly, when the parts have been assembled, but before the framing has been stretched to its full length, for instance by means of turnbuckles (27, 28) or the like.

1

Lars Magnusson

P 7069/McF/sp

14.01.1983

## A DISMOUNTABLE BELT CONVEYOR.

The present invention refers to a dismountable belt conveyor, in the first hand adapted to transfer roof tiles from the ground to a roof, or vice versa, but which can also be used in various construction works.

The aim is to provide a conveyor composed of parts having a size and weight permitting it to be easily moved from one place to another, for instance by a small truck or a car trailer.

A prerequisite for a simple and safe operation is the possibility of using a belt, permanently formed into an endless unit. This will impose certain restrictions upon the framing carrying the belt, the intention being to permit the belt being slipped into, and removed from the framing, respectively, but nevertheless being satisfactorily stretched in use.

The invention thus refers to a dismountable belt conveyor comprising a framing carrying driving means and having rollers at its opposite ends for guiding an endless belt. The invention is characterized in that the framing is composed of at least three interengaging parts, of which the end parts each carries a roller and is provided with support means adapted to permit a sideward introduction of the belt into the framing before this is extended to full operating length.

The parts of the framing are preferably adapted for interengagement by way of telecoping components, and an elongating device, for instance a turnbuckle, is fitted between at least two of the parts of the framing.

The invention will below be described with reference to the accompanying drawings, in which

Figure 1 schematically shows a belt conveyor according to the invention,

Figure 2 shows the upper end part of the conveyor,

Figure 3 shows the lower end part of the conveyor, and
Figure 4 shows a belt support adapted to be mounted at the
intermediate part of the conveyor.

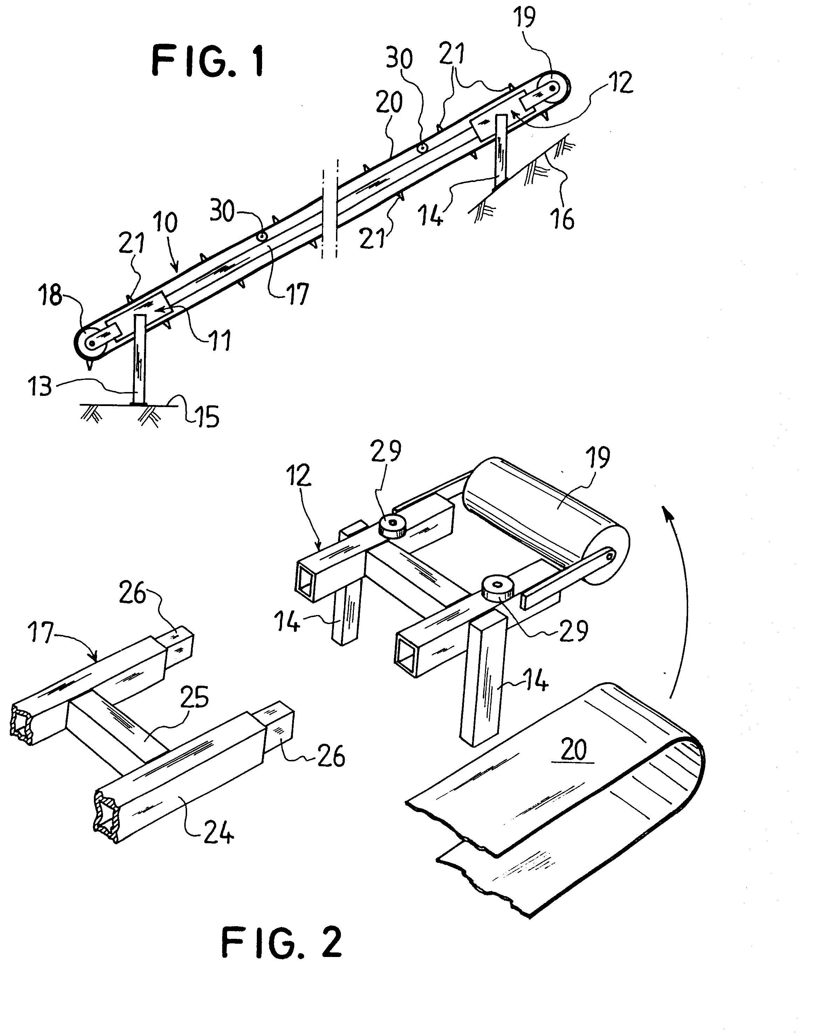

The conveyor 10 shown in Figure 1 comprises a lower end
part 11 and an upper end part 12. These are provided with
strut members 13 and 14, respectively, or other suitable
support means, which facilitate the location of the conveyor with one end resting upon the ground 15 while the
other end extends to a roof 16, or some other elevated
structure.

An intermediate part 17 extends between the two end
parts 11 and 12, and may possibly be subdivided into two or
more portions, so a suitable length of the conveyor is obtained considering the expected work to be performed, but
without each part being too long or too heavy for transportation in dismounted state.

Each end part 11, 12 carries a roller 18, 19, of which
the former encloses a built-in, reversible electric motor.

An endless belt 20 will, in use, pass over the rollers
18, 19 and is provided with spaced-apart carrier dogs 21.

As the driving motor is reversible the conveyor can be
used for instance for transferring roof tiles from the
ground to a roof, but it may also be used for lowering tiles
to the ground, when a roof is to be repaired.

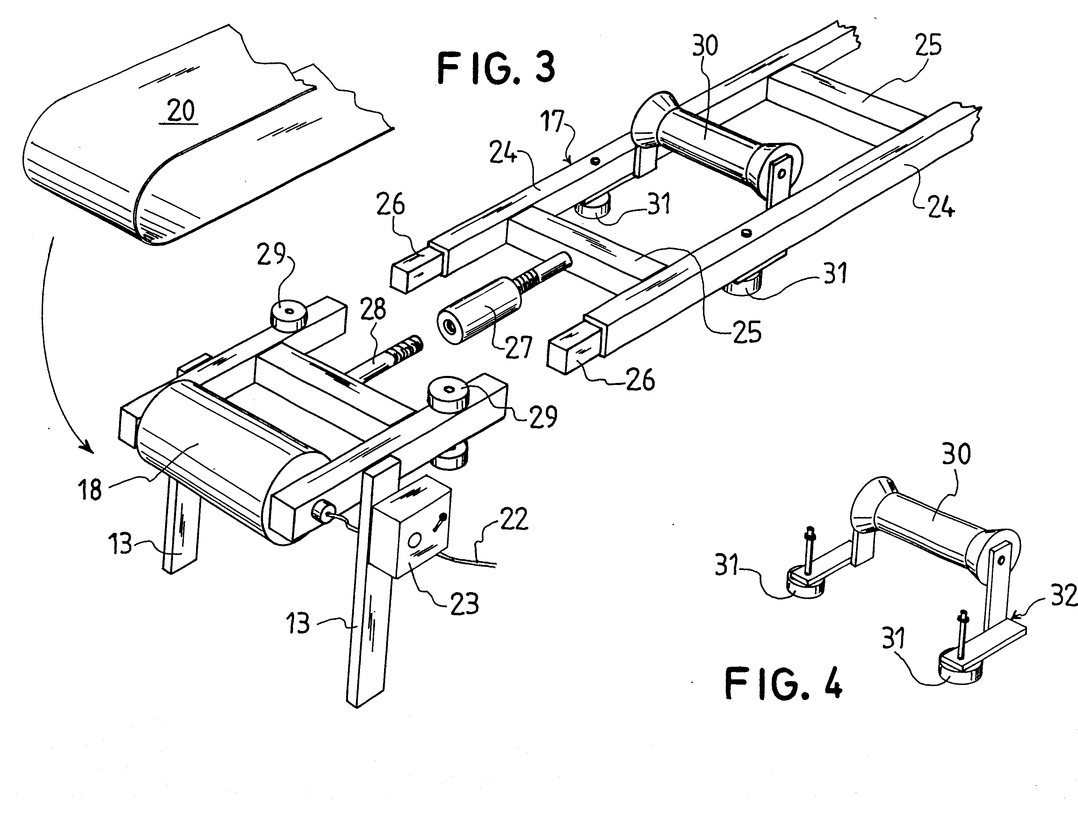

The lower end part 11 of the framing and a portion of
the intermediate part 17 are shown in Figure 3. An electric
motor (not shown) is fitted within the roller 18, and is
supplied with current through a cable 22. Starting and stopping, as well as selection of direction of rotation are
governed by means of a control box 23.

The intermediate part 17 can be formed as a ladder-like
structure having parallel side beams 24, interconnected by
cross pieces 25. The end parts 11 and 12, as well as the
intermediate part 17 are built up of square section light
metal tubes, the tube ends of one part being provided with
studs 26 of reduced cross section, which can be introduced
in the tubular ends of the juxtaposed part.

The studs 26 permit a guided telescoping movement between the parts, which is essential for the possibility of mounting and stretching the belt 20.

For that purpose it is important that the strut means 13 and 14 are designed so as to permit the belt 20 being slipped on sidewardly upon the framing. This will preliminarily be assembled with the parts 11, 12, 17 pushed to a close position. When the belt has been slipped upon the rollers 18, 19, the belt is stretched by the parts 11, 12, 17 being moved apart, along the studs 26.

This can be performed by means of a turnbuckle device 27, 28, or by means of toggle levers or the like.

Adjacent to the end rollers 18, 19 there are guiding rollers 29, rotating about axes being perpendicular to the plane of the framing. A suitable number of support rollers 30, rotating about axes parallel to the plane of the framing are provided at the uppwardly face of the framing. The latter rollers are, in a conventional manner, provided with tapering end portions. These rollers will support the belt and hold it out of contact from the framing the tapering end portions guiding the belt in its longitudinal direction. At the lower face of the framing there are further guide rollers 31, similar to the guide rollers 29 at the end parts. At the lower face of the framing the belt tends to sag down, so support rollers 30 will not be so efficient here.

Support rollers 30 and guide rollers 31 can preferably be mounted at a fitting 32 of the kind shown in Figure 4. A number of such fittings are mounted at the intermediate framing part 17, spaced apart by a suitable distance.

The embodiment shown and described in the specification will illustrate he basic principle only, and the shape of the various components may vary in many ways within the scope of the appended claims.

The intermediate part 17 may, as is mentioned above, be composed of a number of components fitted together. The struts 13 of the lower end part 11 may be provided with wheels to facilitate transportation of the conveyor within a working place.

P 7069/McF/sp
14.01.1983

## CLAIMS

1. A dismountable belt conveyor comprising a framing (10) carrying driving means and having rollers (18, 19) at its opposite ends for guiding an endless belt (20), c h a r a c t e r i z e d  in that the framing (10) is composed of at least three interengaging parts (11, 12 17), of which the end parts (11, 12) each carries a roller (18, 19) and is provided with support means (13, 14) adapted to permit a sideward introduction of the belt (20) into the framing (10) before this is extended to full operating length.

2. A belt conveyor according to claim 1, c h a r a c t e r i z e d  in that the parts (11, 12, 17) of the framing are adapted for interengagement by way of telescoping components (26), and that an elongating device, for instance a turnbuckle (27, 28), is fitted between at least two of the parts (11, 17) of the framing.

FIG. 1

FIG. 2

0114155

# FIG. 3

# FIG. 4

**EUROPEAN SEARCH REPORT**

European Patent Office

| DOCUMENTS CONSIDERED TO BE RELEVANT | | | | EP 84850015.3 |
|---|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US - A - 1 849 205 (RYPINSKI)<br>* Claim 1 *<br>-- | 1 | B 65 G 21/06<br>B 65 G 41/00 |
| A | CH - A - 429 582 (STEINER)<br>* Column 3, lines 32-37 *<br>-- | 2 | |
| A | US - A - 3 835 982 (ZAPPIA)<br>* Fig. 3 *<br>-- | 2 | |
| A | GB - A - 649 883 (COLLIS)<br>* Page 3, lines 37-52 *<br>-- | 1 | |
| A | DE - A - 2 011 753 (EICKHOFF)<br>* Claim 1; fig. 1; page 4, lines 25-27 *<br>---- | 1 | **TECHNICAL FIELDS SEARCHED (Int. Cl. ³)**<br><br>B 65 G 15/00<br>B 65 G 21/00<br>B 65 G 41/00 |

The present search report has been drawn up for all claims

| Place of search | Date of completion of the search | Examiner |
|---|---|---|
| VIENNA | 11-04-1984 | BAUMGARTNER |